# EUROPEAN PATENT SPECIFICATION

(11) **EP 3 589 112 B1**
(45) Date of publication and mention of the grant of the patent: **09.08.2023**
(21) Application number: 18709764.7
(22) Date of filing: 19.01.2018
(51) Int. Cl.: A01F 15/08

(54) **SYSTEM AND METHOD FOR DETERMINING BALE LOCATION AND ORIENTATION**
SYSTEM UND VERFAHREN ZUR BESTIMMUNG DES ORTES UND DER AUSRICHTUNG VON BALLEN
SYSTÈME ET PROCÉDÉ DE DÉTERMINATION D'EMPLACEMENT ET D'ORIENTATION DE BALLE

(30) Priority: 02.03.2017 US 201762466047 P
(43) Date of publication of application: 08.01.2020
(73) Proprietor: AGCO Corporation, Duluth, GA 30096 (US)
(72) Inventor: JOHNSON, Gerald, R., Hesston, KS 67062-0969 (US)
(74) Representative: AGCO Intellectual Property Department
(86) International application number: PCT/IB2018/000028
(87) International publication number: WO 2018/158630

(56) References cited:
- EP-A1- 2 149 293
- EP-A1- 3 254 554
- WO-A1-2014/031355
- US-A1- 2006 086 263
- US-A1- 2014 278 083

## Description

### FIELD

The present invention relates to systems and methods for determining the orientation of a bale of agricultural product formed by a mobile baling mechanism and deposited on a ground surface.

### BACKGROUND

Hay and forage crops may be harvested by cutting the crops, allowing the crops to lie on the ground to dry, and then baling the dried crop. Baling the dried crop involves the use of balers that collect the crop from the ground as the baler travels along the ground, form the crop into a bale, tie or wrap the bale to preserve the bale's shape and/or protect it from the elements, and then place the bale onto the ground. Typically the bales are placed on the ground as they are formed by the baler such that a plurality of bales are placed randomly across a field. The bales are typically removed from the field shortly after baling and may be stacked in a convenient location in the field or in the same region, or may be transported to a distant location.

United States patent application US 2014/278083 describes a system comprising a mobile baling mechanism for creating a bale of agricultural product and placing the bale on a ground surface, and one or more computing devices for automatically determining a location and an orientation of the bale on the ground surface.

A further example is described in United States patent application US 2006/086263. EP 3 254 554 discloses one or more computing devices configured to determine the orientation of a bale.

### SUMMARY

A system in accordance with a first embodiment of the invention is recited in claim 1 of the claims attached hereto.

A method in accordance with a second embodiment of the invention is recited in claim 9 of the claims attached hereto.

These and other important aspects of the present invention are described more fully in the detailed description below. The invention is not limited to the particular methods and systems described herein. Other embodiments may be used and/or changes to the described embodiments may be made without departing from the scope of the claims that follow the detailed description.

### DRAWINGS

Embodiments of the present invention are described in detail below with reference to the attached drawing figures, wherein:
Fig. 1 is a perspective view of a plurality of round bales of agricultural product placed on the ground surface of a field.
Fig. 2 is a perspective view of a plurality of rectangular bales of agricultural product placed on the ground surface of a field.
Fig. 3 is a plan view of a plurality of rectangular bales of agricultural product placed on the ground surface of a field.
Fig. 4 is a perspective view of a tractor and rectangular baler used to form rectangular bales of agricultural product.
Figs. 5A-C are block diagrams of exemplary communications and control systems used in the tractor and/or baler of Fig. 4.
Fig. 6 is a block diagram of an exemplary communications and control system used in the tractor and baler of Fig. 4.
Figs. 7A-C illustrate a first orientation of a rectangular bale.
Figs. 8A-C illustrate a second orientation of a rectangular bale.
Figs. 9A-C illustrate a second orientation of a rectangular bale.
Fig. 10 illustrates a path followed by the tractor and baler of Fig. 4 and the location of the tractor and bale on the path.
Figs. 11-13 illustrate exemplary location and orientation information that may be stored in a computer-usable data table.
Figs. 14A-B is a diagram of a round bale of agricultural product illustrating various axes of the bale.

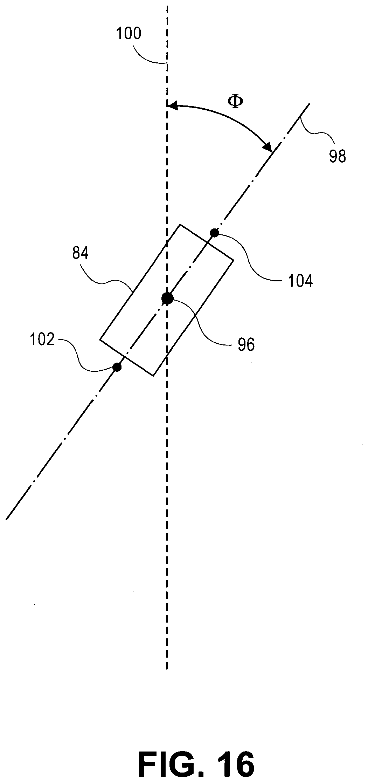

Figs. 15-16 are plan views of a rectangular bale of agricultural product in a field, illustrating how an orientation of the bale may be determined.

The drawing figures do not limit the present invention to the specific embodiments disclosed and described herein. The drawings are not necessarily to scale, emphasis instead being placed upon clearly illustrating the principles of the invention.

### DESCRIPTION

The following detailed description of embodiments of the invention references the accompanying drawings. The embodiments are intended to describe aspects of the invention in sufficient detail to enable those skilled in the art to practice the invention. Other embodiments can be utilized and changes can be made without departing from the scope of the claims. The following description is, therefore, not to be taken in a limiting sense.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the present technology can include a variety of combinations and/or integrations of the embodiments described herein.

Embodiments of the invention involve a mobile baling mechanism for creating a bale of agricultural product and placing the bale on a ground surface, and a system for automatically determining a location and an orientation of the bale on the ground surface. The location of the bale may be defined by longitude and latitude coordinates of the bale. The orientation of the bale is the position of a horizontal axis of the bale about a vertical axis of the bale, such as the position of a horizontal axis of the bale relative to a cardinal direction. The invention may be used to collect and store location and orientation information for a plurality of bales in a field, and the information may be used to optimize collection of the plurality of bales.

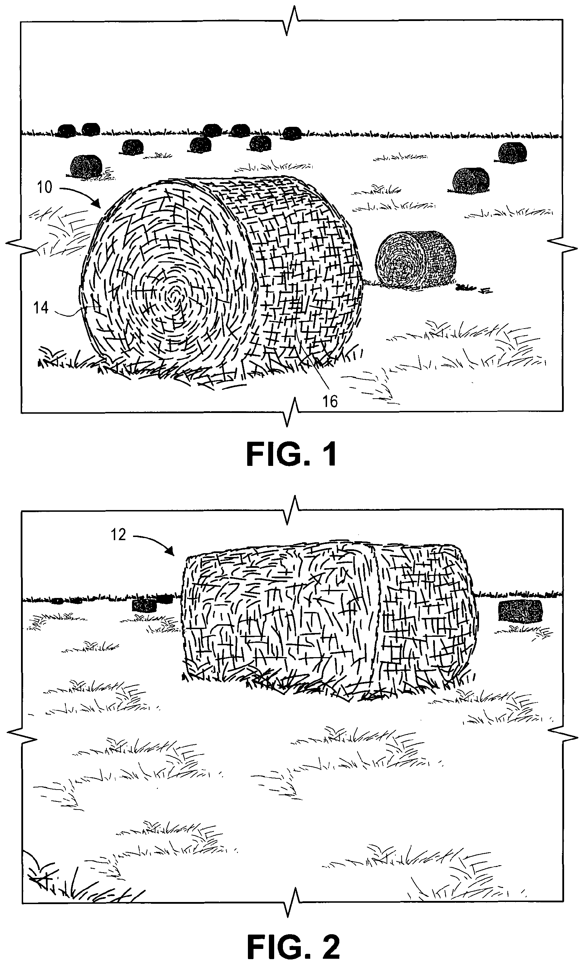

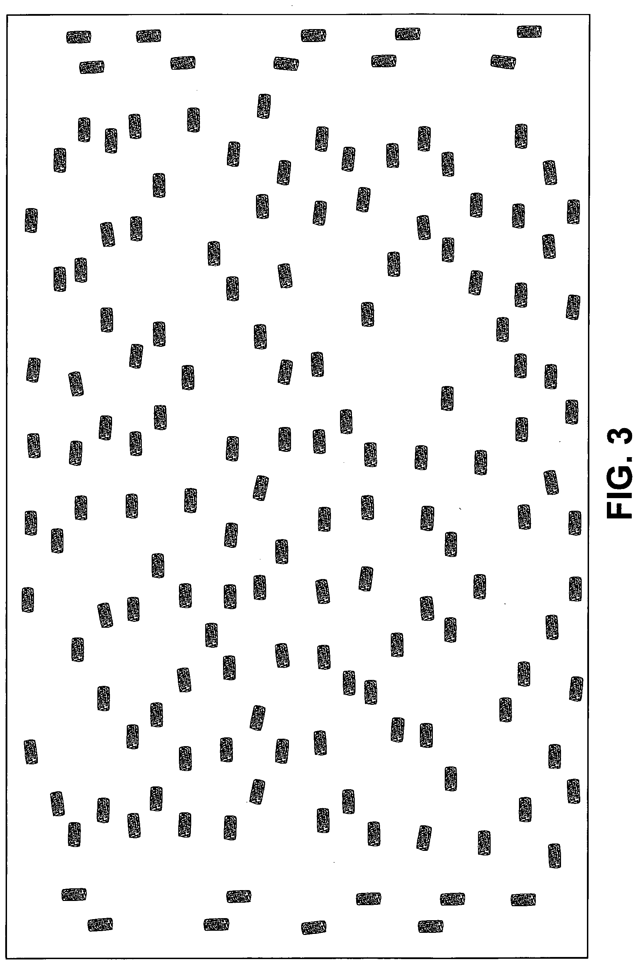

Exemplary bales of agricultural product are illustrated in Figures 1 through 3. Such bales may include a hay or forage crop for feeding livestock or may include straw or other biomass used for purposes other than feeding livestock. Round bales 10 are illustrated in Fig. 1 and rectangular bales 12 are illustrated in Figs. 2 and 3. The round bales 10 are generally cylindrical in shape with opposing flat end faces 14 defining a height of the bale and a cylindrical outer surface 16 defining a width of the bale between the end faces 14. Round bales typically range in size from one meter in height and one meter in width to two meters in height and two meters in width. The weight of such bales typically falls within the range of 180 kilograms to 780 kilograms depending on the size and density of the bale. Some common bale sizes include 1.3 meters wide by 1.5 meters high, 1.5 meters wide by 1.5 meters high, and 1.5 meters wide by 1.8 meters high. Some common bale weights include 270 kilograms, 360 kilograms, 450 kilograms and 550 kilograms.

There are two general sizes of rectangular bales-small and large. Generally, small rectangular bales may be moved by hand while large rectangular bales are too large to be moved by hand and require the use of machines. The bales 12 illustrated in Figs. 2 and 3 are large rectangular bales. Common sizes of large rectangular bales include 0.9 meters wide by 0.9 meters tall, 0.9 meters wide by 1.2 meters tall, and 1.2 meters wide by 1.2 meters tall. The length of large rectangular bales varies but is typically within the range of about 1.5 meters to about 2.5 meters, 1.8 meters is a common length. The weight of large rectangular bales typically falls within the range of 200 kilograms to 900 kilograms depending on the size and density of the bale. Some common bale weights include 360 kilograms, 450 kilograms, 550 kilograms and 640 kilograms.

A field may include a large number of bales, as illustrated in Fig. 3. Each of the bales is placed on the ground by a mobile baling mechanism as the bale is formed such that the location and orientation of each bale is random. The field of Fig. 3 is depicted in plan view such that changes in elevation across the field are not discernable, but areas of ground surface that are not level would cause the bales to be tilted along a longitudinal axis (pitch), along a lateral axis (roll), or both.

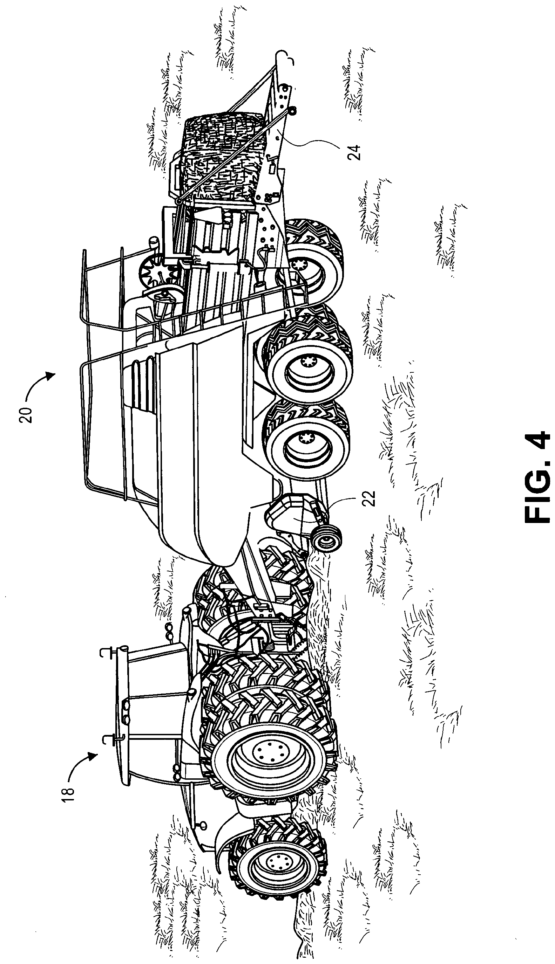

A mobile baling mechanism according to an embodiment of the invention includes a tractor 18 coupled with a large square baler 20 as illustrated in Fig. 4. The tractor 18 pulls the baler 20 through a field and drives operation of the baler 20 via a power takeoff of the tractor 18. A bale feeding system of the baler includes a pickup 22 for collecting hay or other agricultural product from a ground surface and feeding the agricultural product into an internal bale forming system of the baler. The baler forms the hay into a bale, ties the bale, and discharges the formed bale onto the ground via a chute 24 for conveying the bale to the ground surface. The baler 20 may include a weighing mechanism for determining a weight of the bale, and may include a sensor for determining when a bale has been deposited on the ground surface, as explained in greater detail below.

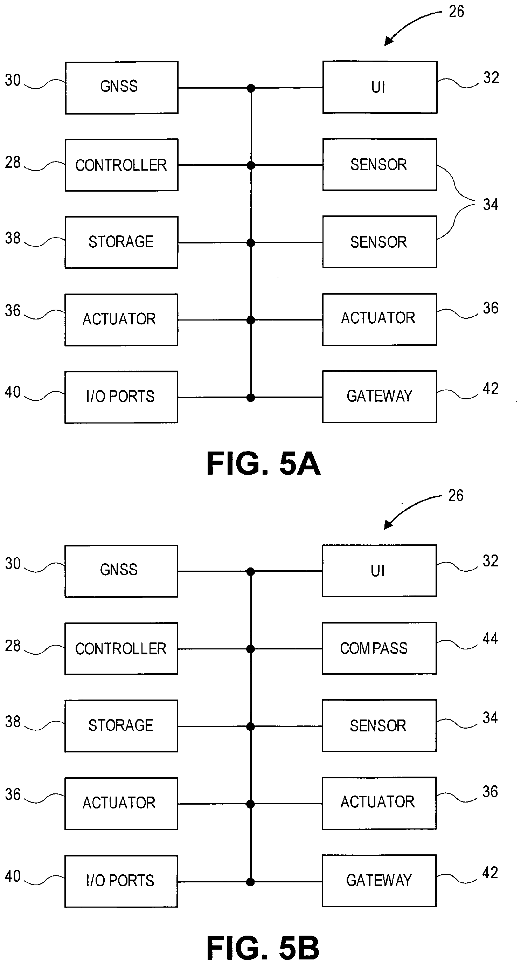

The tractor 18, the baler 20, or both may include a control and communications system. Various components of an exemplary control and communications system 26 are illustrated in Figs. 5A-C. The system 26 broadly includes a controller 28, a position determining device 30, a user interface 32, one or more sensors 34, one or more actuators 36, one or more data storage components 38, one or more input/output ports 40 and a communications gateway 42.

The position determining device 30 may include a global navigation satellite system (GNSS) receiver, such as a device configured to receive signals from one or more positioning systems such as the United States' global positioning system (GPS), the European GALILEO system and/or the Russian GLONASS system, and to determine a location of the machine using the received signals. The user interface 32 includes components for receiving instructions or other input from a user and may include buttons, switches, dials, and microphones, as well as components for presenting information or data to users, such as displays, light-emitting diodes, audio speakers and so forth. The user interface 32 may include a touchscreen display capable of presenting visual representations of information or data and receiving instructions or input from the user via a single display surface.

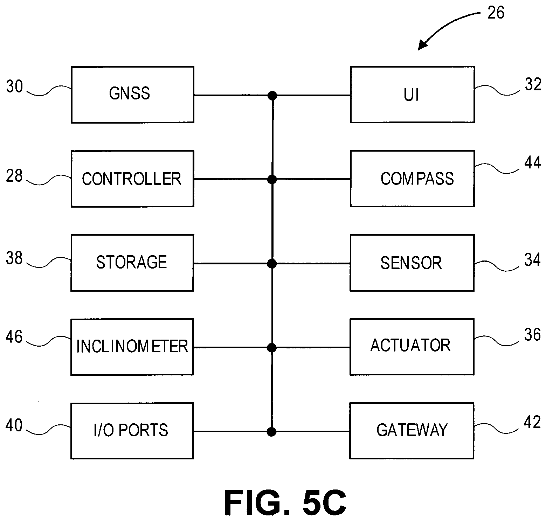

The sensors 34 may be associated with any of various components or functions of the host machine including, for example, various elements of the engine, transmission(s), and hydraulic and electrical systems. One or more of the sensors 34 may be configured and placed to detect environmental or ambient conditions in, around or near the host machine. One of the sensors may be a compass 44, as illustrated in Fig. 5B, used to detect a heading of the machine. Another of the sensors may be an inclinometer 46 for detecting pitch and roll of the machine. The system illustrated in Fig. 5C includes both a compass 44 and an inclinometer 46.

The actuators 36 are configured and placed to drive certain functions of the machine including, for example, steering when an automated guidance function is engaged. The actuators 36 may take virtually any form but are generally configured to receive control signals or instructions from the controller 28 (or other component of the system 26) and to generate a mechanical movement or action in response to the control signals or instructions. By way of example, the sensors 34 and actuators 36 may be used in automated steering of a machine wherein the sensors 34 detect a current position or state of steered wheels or tracks and the actuators 36 drive steering action or operation of the wheels or tracks.

The controller 28 includes one or more integrated circuits programmed or configured to implement the functions described herein. By way of example the controller 28 may be a digital controller and may include one or more general purpose microprocessors or microcontrollers, programmable logic devices, or application specific integrated circuits. The controller 28 may include multiple computing components placed in various different locations on the machine. The controller 28 may also include one or more discrete and/or analog circuit components operating in conjunction with the one or more integrated circuits or computing components. Furthermore, the controller 28 may include or have access to one or more memory elements operable to store executable instructions, data, or both. The storage device 38 stores data and preferably includes a non-volatile storage medium such as optic, magnetic or solid state technology.

In some embodiments, all of the components of the system 26 are contained on or in a host machine, such as the tractor 18 or the baler 20. The present invention is not so limited, however, and in other embodiments one or more of the components of the system 28 may be external to the machine. In another embodiment, for example, some of the components of the system 28 are contained on or in the tractor 10 while other components of the system 28 are contained on or in the baler 20. In that embodiment, the components associated with the tractor 18 and the components associated with the baler 20 may communicate via wired or wireless communications according to a local area network such as, for example, a controller area network. The system 28 may be part of a communications and control system conforming to the ISO 11783 (also referred to as "ISOBUS") standard. In yet another exemplary embodiment, one or more components of the system 28 may be located remotely from the machine and any implements associated with the machine. In that embodiment, the system 28 may use wireless communications components (e.g., the gateway 42) to communicate with a remote computer, computer network or system.

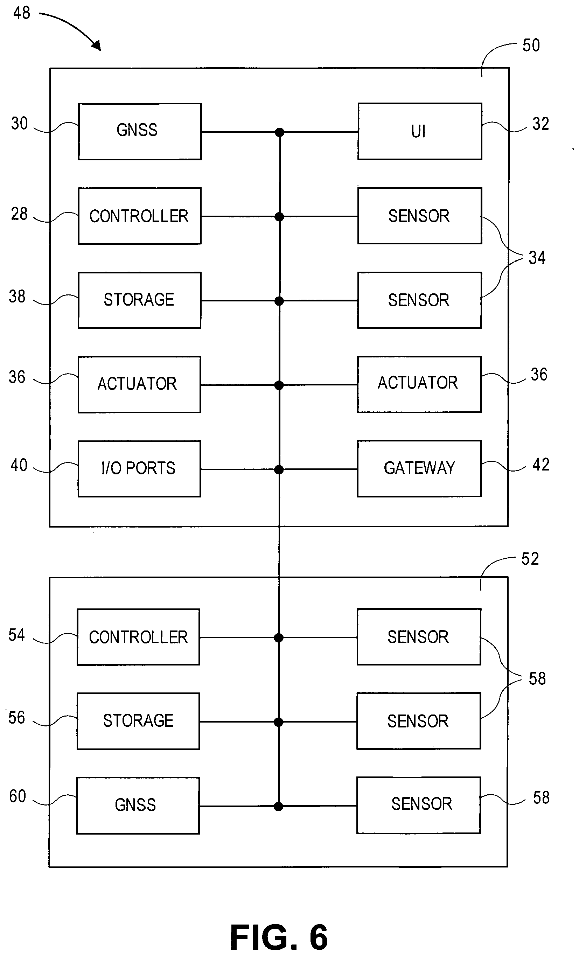

Another exemplary electronic system is illustrated in Fig. 6. The system 48 illustrated in Fig. 6 is similar to the system 26 illustrated in Fig. 5A except that the system 48 includes a first portion 50 comprising components housed on the tractor 18 and a second portion 52 comprising components housed on the baler 20. The first portion 50 includes the same components as the system 26, described above. The second portion 52 includes a controller 54, a data storage component 56, one or more sensors 58 and a position determining component 60. The components 54, 56, 58, 60 of the second portion 52 function in a similar way to the components of the system 26 with the same name. The two portions 50, 52 may be in communication via wired or wireless communications. In this embodiment one or more of the sensors 58 may include a compass, inclinometer, and/or a position determining device housed on the baler 20 and used to determine the location, orientation or both of bales formed by the baler 20 and left on the ground surface. One of the sensors 58 may detect the weight of a formed bale in the baler.

It will be appreciated that, for simplicity, certain elements and components of the systems 26, 48 have been omitted from the present discussion and from the drawings of Figs. 5 and 6. A power source or power connector is also associated with the systems 26, 48, for example, but is conventional in nature and, therefore, is not discussed in detail herein.

In operation, as the baler 20 forms a bale of agricultural product and places the bale on the ground the communications and control system determines a location and an orientation of the bale on the ground surface. The location of the bale may correspond to a geographic location indicated by, for example, longitude and latitude coordinates. The orientation of the bale may include the position of a horizontal axis of the bale about a vertical axis of the bale, a pitch of the bale and/or a roll of the bale.

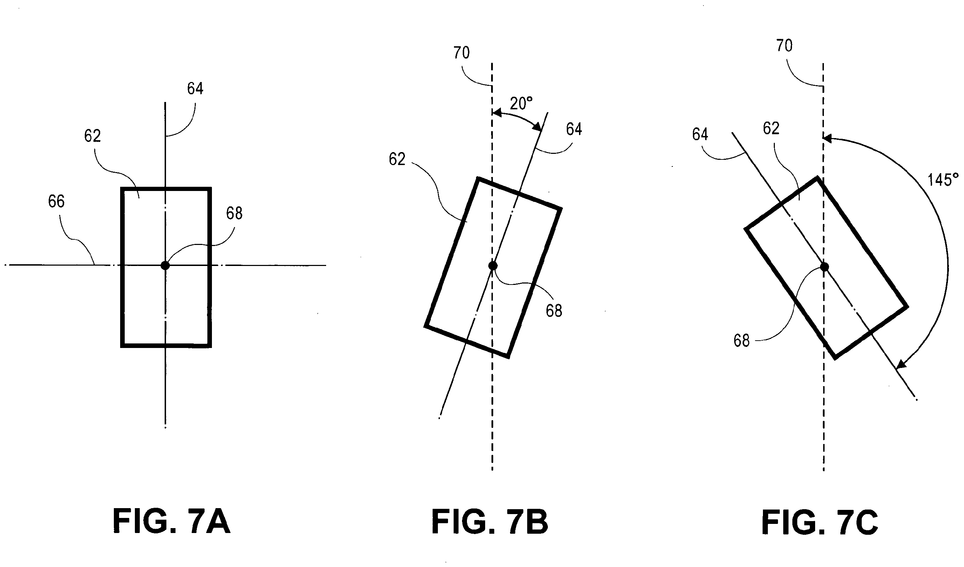

Various positions of a horizontal axis of a bale 62 about a vertical axis are illustrated in Figs. 7A-C. Each of Figs. 7A-7C is a top view of the bale 62 illustrating a longitudinal horizontal axis 64 and a lateral horizontal axis 66, wherein a vertical axis of the bale is normal to the plane of the drawing and is represented by the center point 68. The orientation of the bale 62 corresponds to the position of the longitudinal axis 64 relative to a north-south line 70 (or other cardinal direction). In Fig. 7A, the bale 62 is positioned such that the horizontal axis 64 is parallel with the north-south line 70, therefore the orientation of the bale is 0°. In Fig. 7B the bale 62 is positioned such that the horizontal axis 64 is rotated clockwise approximately 20° relative to the north-south line 70, therefore the orientation of the bale is 20°. In Fig. 7C the bale 62 is positioned such that the horizontal axis 64 is rotated clockwise approximately 145° relative to the north-south line 70, therefore the orientation of the bale is 145°. The orientation of the bale 62 is determined using an end of the bale that is on the east side of the north-south line 70 (that is, to the right of the north-south line 70 in the drawings). Thus, using this approach the orientation will always be between 0° and 180°.

In the example illustrated in Fig. 7 the longitudinal axis 64 of the bale 62 is used to determine the orientation of the bale, but it will be appreciated that the use of a different axis, such as the lateral axis 66, is within the ambit of the invention. It should also be noted that the pitch and roll of the bale 62 in this scenario are ignored.

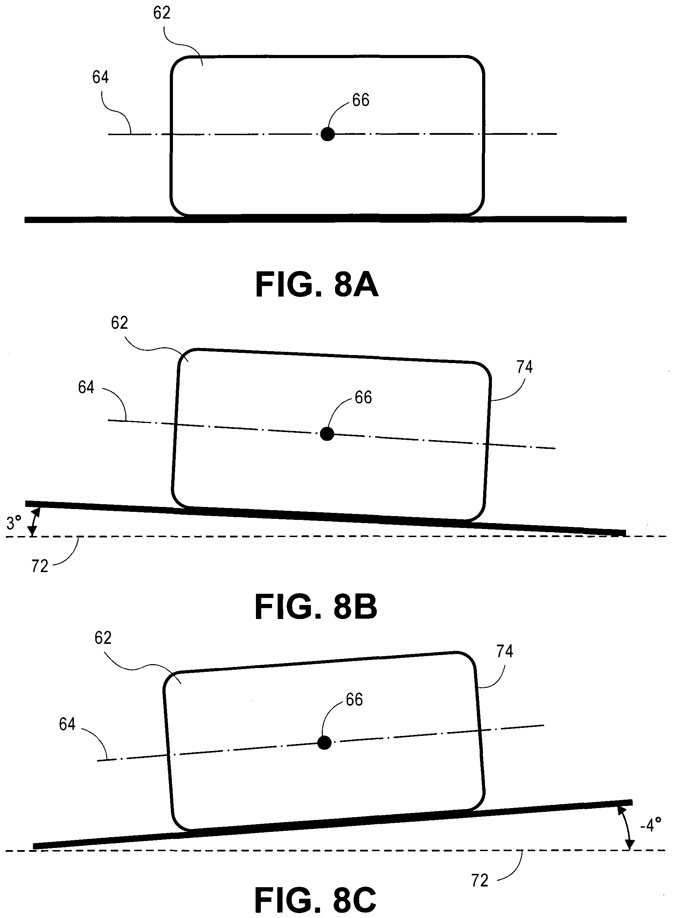

Variations in the pitch of the bale 62 are illustrated in Figs. 8A-C, wherein the dashed line 72 represents level relative to gravity. The pitch of the bale 62 corresponds to the forward or backward tilt of the bale 62 or, in other words, the degree to which the longitudinal axis 64 of the bale 62 deviates from level. In Fig. 8A the bale 62 is level and therefore has a pitch of 0°. In Fig. 8B the bale 62 is 3° from level and therefore has a pitch of 3°. In Fig. 8C the bale 62 is -4° from level and therefore has a pitch of -4°. To distinguish between positive and negative pitch, if the end of the bale 62 east of the north-south line 70 (to the right of the north-south line 70 in Fig. 7A) is lowest the pitch is positive and if the end of the bale 62 east of the north-south line 70 is highest the pitch is negative. Thus, in Figs. 8B and 8C the end 74 of the bale 62 is to the east of the north-south line 70.

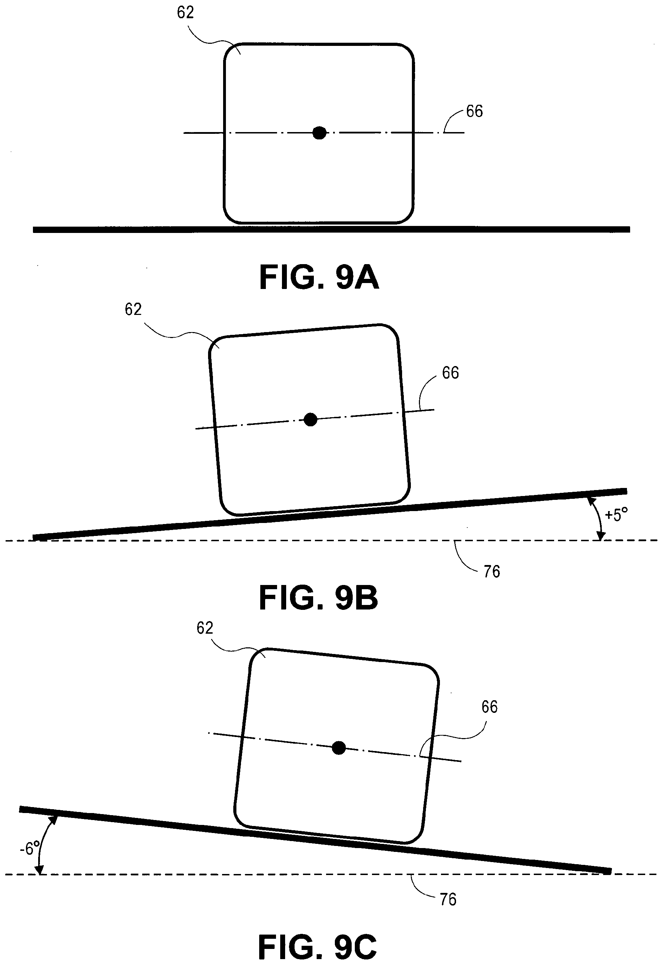

Variations in the roll of the bale 62 are illustrated in Figs. 9A-C, wherein the dashed line 76 represents level relative to gravity. The roll of the bale 62 corresponds to the lateral tilt of the bale 62 or, in other words, the degree to which the lateral axis 66 of the bale 62 deviates from level. In Fig. 9A the bale 62 is level and therefore has a roll of 0°. In Fig. 9B the bale 62 is 5° from level and therefore has a roll of 5°. In Fig. 9C the bale 62 is -6° from level and therefore has a roll of -6°. To distinguish between positive and negative roll, if the side of the bale 62 east of the north-south line 70 (to the right of the north-south line 70 in Fig. 7A) is highest the roll is positive and if the side of the bale 62 west of the north-south line 70 is lowest the roll is negative. Thus, in Figs. 9B and 9C the side 78 of the bale 62 is to the east of the north-south line 70.

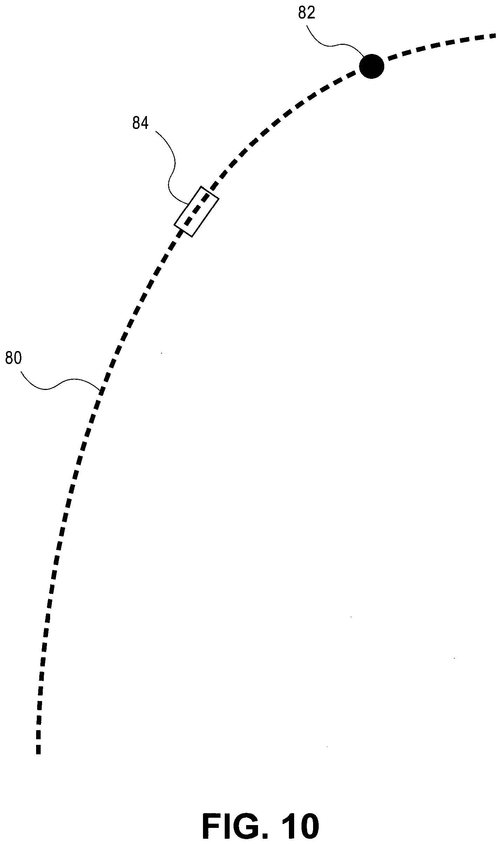

A first method of determining the location and orientation of a bale involves using the location determining component 30, the compass 44 and the inclinometer 46 on the tractor 18 to determine a location and orientation of the tractor 18, and then using that information to determine the location and orientation of the bale on the ground surface. As illustrated in Fig. 10 the tractor 18 follows a path 80 during operation. As the tractor 18 moves along the path 80, the location determining component 30, the compass 44 and the inclinometer 46 continuously determine the location, the heading and the pitch and/or roll of the tractor 18, respectively. The system 26 associates a heading, pitch and roll of the tractor 18 with each new location generated by the location determining component 30. The path 80 comprises a series of locations of the tractor 18 as determined by the location determining component 30. The baler 20 trails the tractor 18 and, in most scenarios, follows the same path 80 as the tractor 18.

The location of the tractor 18 at the time a bale is dropped, as determined by the location determining component 30, will not correspond to the drop location of the bale because the baler 20 trails the tractor 18 and the bale is dropped from a rear portion of the baler 20, which may be several meters from the location of the tractor 18. However, the baler 20 follows the same path 80 as the tractor 18 therefore the location of the bale will correspond to a point on the travel path 80 of the tractor 18. Thus, to resolve the discrepancy between the location of the tractor 18 and the location of the bale at the time the bale is dropped, the system 26 assigns to the bale a location corresponding to a location on the travel path 80 a predetermined distance behind the location of the tractor 18. The computing device also associates with the bale the orientation information associated with the location.

As illustrated in Figure 10, the location determining component 30 records a location 82 of the tractor 18 at the time the bale is dropped. The system then determines the location of the bale as a predetermined distance along the path 80 behind the location 82 of the tractor at the time the bale was dropped. The predetermined distance may be provided by the manufacturer of the baling mechanism, or may be determined by the operator.

The computing device stores in memory a list of locations and associated orientations corresponding to the path 80 followed by the tractor 18 and continuously revises the list to include the most recent travel path locations and associated orientations, and discards travel path information that is beyond a predetermined distance from the tractor 18. When a bale drop is sensed the system 26 automatically associates with the bale the travel path location 84 behind the tractor's location 82 and the orientation information associated with the location 84.

The orientation information captured by the system 26 reflects the orientation of the ground surface corresponding to the location 84 because the tractor's orientation is determined by the ground surface. Thus, the orientation information associated with the location 84 also reflects the orientation of the bale, which rests upon the ground surface. Each time a bale is dropped the system 26 captures the location and orientation of the bale and stores it in memory, thereby collecting and storing the location and orientation information for a plurality of bales.

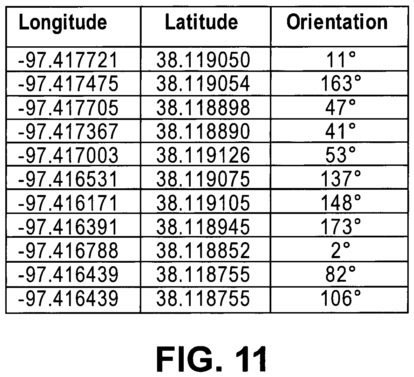

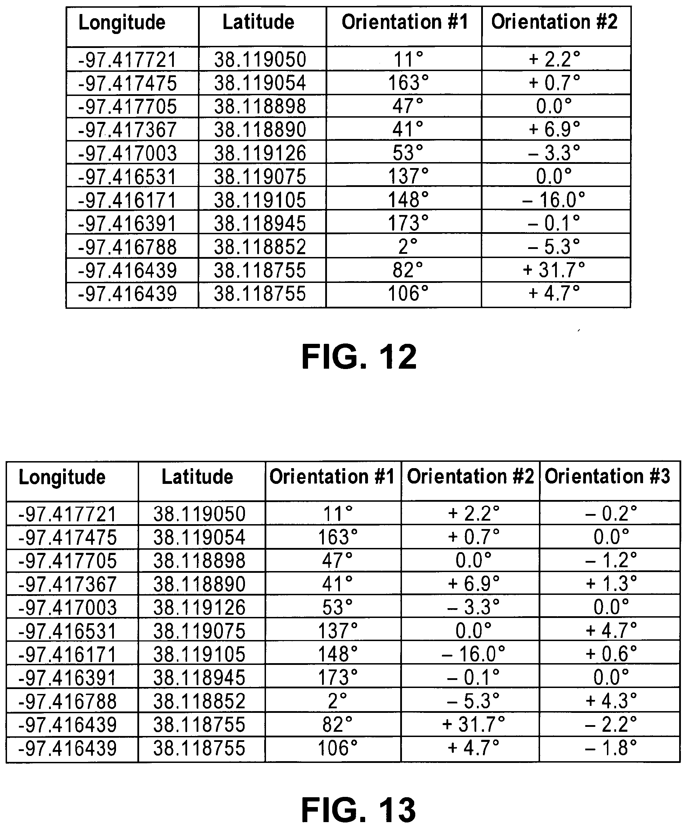

Figures 11 through 13 depict the contents of computer-readable data tables stored in the memory and/or storage component containing location and orientation information for a plurality of bales. The data table illustrated in Fig. 11 includes a longitude value, a latitude value and one orientation value in each row of the table, each row corresponding to a unique bale. The orientation information in the table depicted in Fig. 11 includes only a position of the longitudinal horizontal axis 64 of the bale 62 about the vertical axis 68 of the bale 62. The data table illustrated in Fig. 12 is similar to the data table illustrated in Fig. 11 except that the table in Fig. 12 includes two pieces of orientation information-the position of the longitudinal horizontal axis of the bale about a vertical axis of the bale and the roll of the bale. The data table illustrated in Fig. 13 is also similar to the data table illustrated in Fig. 11 except that the table in Fig. 13 includes three pieces of orientation information-the position of the longitudinal horizontal axis of the bale about a vertical axis of the bale, the roll of the bale and the pitch of the bale.

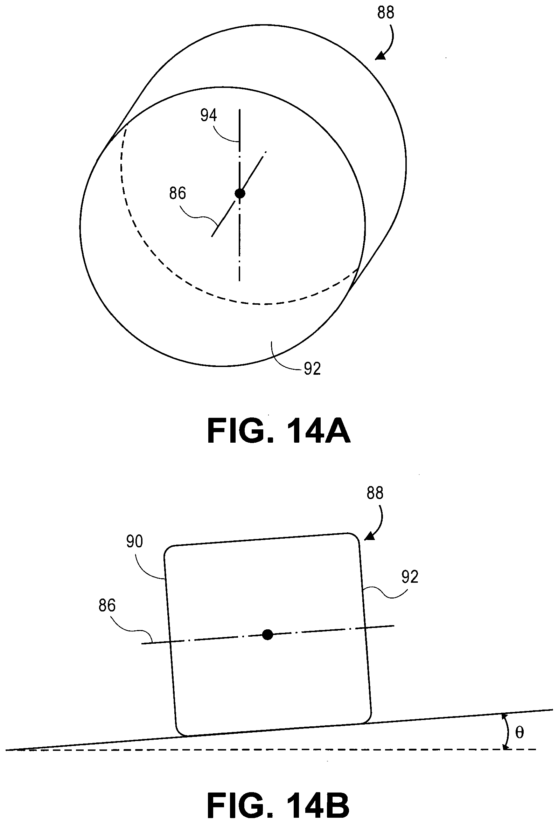

This method may be used with a system that includes machines other than a tractor and a rectangular baler, it will be appreciated that the invention is not so limited and that other types of baling mechanisms may be used as well. The system may be used with a round baler, for example, in a manner very similar to that described above. As illustrated in Fig. 14A, a horizontal axis 86 of a round bale 88 corresponds to a line intersecting the center of each of two opposing planar faces 90, 92 of the bale 88. A first orientation of the round bale 88 may correspond to the position of the horizontal axis 86 about a vertical axis 94. With reference to Fig. 14B, a second orientation of the bale 88 may correspond to a tilt of the bale, or a deviation of the horizontal axis 86 from level represented by the angle Θ.

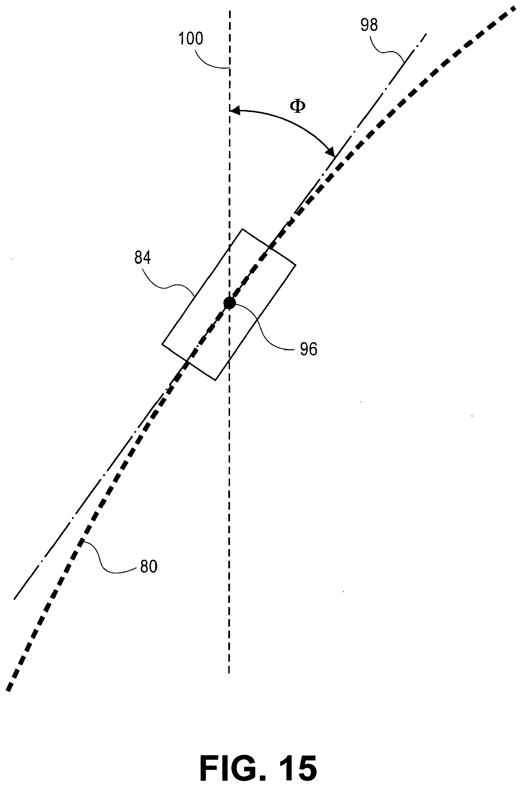

A second method of determining the location and orientation of a bale is similar to the first method, described above, but does not involve the use of a compass to determine the heading of the tractor. Rather, the second method involves using two or more locations of the tractor 18, as determined by the location determining component 30, to determine the tractor's heading. Figure 15 illustrates in greater detail the travel path 80 and bale location 84 of Fig. 10. A point 96 represents a center and vertical axis of the bale. The system 26 determines the location 84 of the bale and the position of the longitudinal horizontal axis 98 of the bale relative to a north-south line 100 as an angle Φ, as explained above. As illustrated in Fig. 15, the longitudinal axis 98 of the bale is tangential with the travel path 80 at or near the center of the bale.

Given that the longitudinal axis 98 of the bale is tangential with the travel path 80 at or near the center of the bale, the system 26 may use two points 102, 104 on the travel path near the center of the bale location 84 to define the longitudinal axis 98 of the bale.

A third method of determining the location and orientation of a bale is similar to the first method described above, but involves using a location determining component 60, a compass and a tilt sensor on the baler 20 to determine a location and orientation of the baler 20, and then using that information to determine the location and orientation of the bale on the ground surface. This method may be implemented using the system 48 of Fig. 6, and may involve detecting when a bale has dropped and associating a location with the dropped bale. If the location generated by the location determining component 60 does not correspond to the actual crop location of the bale, it may be necessary to apply an offset to the location generated by the location determining component to define the actual location of the bale in the field. This may be done in a manner similar to that described above, by defining a travel path of the baler 20 as a series of locations determined by a location-determining component and associating orientation information with each location.

Although the invention has been described with reference to the preferred embodiment illustrated in the attached drawing figures, it is noted that equivalents may be employed and substitutions made herein without departing from the scope of the invention as recited in the claims. For example, while various methods of determining the orientation of a bale have been described above, it will be appreciated that these methods are exemplary in nature and that other methods may be used without departing from the scope of the invention as recited in the claims.

## Claims

1. A system for determining bale location and orientation comprising:
a mobile baling mechanism (18, 20) operable to create a bale (10, 12, 62) of agricultural product and place the bale on a ground surface; and
one or more computing devices (28, 54) configured to automatically determine a location and an orientation of the bale (10, 12, 62) on the ground surface;
**characterized in that** the one or more computing devices (28, 54) are configured to determine the orientation of the bale (10, 12, 62) as a position of a horizontal axis (64) of the bale (10, 12, 62) about a vertical axis (68) of the bale, as a pitch and a roll of the bale.

2. The system as set forth in claim 1, further comprising a compass (44) for determining an orientation of the baling mechanism (18, 20), the one or more computing devices (28, 54) configured to automatically determine the orientation of the bale (10, 12, 62) using information from the compass (44).

3. The system as set forth in claim 1, further comprising a location determining component (30) for determining a location of the baling mechanism (18, 20), the one or more computing devices (28, 54) configured to -
determine the location of the bale (10, 12, 62) using the location determined by the location determining component (30),
determine a heading of the baling mechanism (18, 20) using two or more locations as determined by the location determining component (30), and
determine the orientation of the bale (10, 12, 62) using the heading.

4. The system as set forth in claim 1, the one or more computing devices (28, 54) configured to determine at least one axis of the orientation of the bale (10, 12, 62) relative to a cardinal direction (70).

5. The system as set forth in claim 1, the one or more computing devices (28, 54) configured to determine at least one axis of the orientation of the bale (10, 12, 62) relative to an environmental landmark.

6. The system as set forth in claim 1, the one or more computing devices (28, 54) configured to determine at least one axis of the orientation of the bale (10, 12, 62) relative to an orientation of another bale (10, 12, 62).

7. The system as set forth in claim 1, the one or more computing devices (28, 54) configured to assign position and orientation information to a plurality of bales (10, 12, 62) created by the baling mechanism (18, 20) and placed on the ground surface, and to store the position and orientation information for all of the plurality of bales (10, 12, 62) as digital data in a data storage device (38, 56).

8. The system as set forth in claim 7, the one or more computing devices (28, 54) configured to generate a map illustrating the location and orientation of each of the bales (10, 12, 62).

9. A method for determining bale location and orientation comprising:
creating a bale (10, 12, 62) of agricultural product using a mobile baling mechanism (18, 20) and placing the bale on a ground surface; and
using one or more computing devices (28, 54) to automatically determine an orientation of the bale (10, 12, 62) on the ground surface;
**characterized in that** the step of automatically determining an orientation of the bale (10, 12, 62) on the ground surface includes automatically determining a position of a horizontal axis (64) of the bale (10, 12, 62) about a vertical axis (68) of the bale as a pitch and a roll of the bale.

10. The method as set forth in claim 9, further comprising using information from a compass (44) to automatically determine an orientation of the baling mechanism (18, 20).

11. The method as set forth in claim 9, further comprising -
using information from a location determining component (30) to automatically determine a location of the baling mechanism (18, 20),
using the one or more computing devices (28, 54) to automatically determine a heading of the baling mechanism (18, 20) using two or more locations as determined by the location determining component (30), and
using the one or more computing devices (28, 54) to automatically determine the orientation of the bale (10, 12, 62) using the heading.

## Patentansprüche

1. System zum Ermitteln eines Ortes und einer Orientierung mindestens eines Ballens mit
einem mobilen Ballenmechanismus (18, 20), der zur Erzeugung eines Ballens (10, 12, 62) eines landwirtschaftlichen Produktes und zum Anordnen des Ballens auf einer Bodenoberfläche betrieben werden kann;
mindestens einer Computereinrichtung (28, 54), die konfiguriert ist, um automatisch einen Ort und eine Orientierung des Ballens (10, 12, 62) auf der Bodenoberfläche zu ermitteln,
**dadurch gekennzeichnet, dass** die mindestens eine Computereinrichtung (28, 54) konfiguriert sind, um die Orientierung des Ballens (10, 12, 62) als eine Position einer horizontalen Achse (64) des Ballens (10, 12, 62) um eine vertikale Achse (68) des Ballens, als Nick-Neigungswinkel und als Roll-Neigungswinkel des Ballens zu ermitteln.

2. System nach Anspruch 1, des Weiteren mit einem Kompass (44) zur Ermittlung einer Orientierung des Ballenmechanismus (18, 20), wobei die mindestens eine Computereinrichtung (28, 54) konfiguriert ist, um unter Verwendung von Informationen von dem Kompass (44) automatisch die Orientierung des Ballens (10 ,12, 62) zu ermitteln.

3. System nach Anspruch 1, des Weiteren mit einer Komponente (30) zur Ermittlung eines Ortes des Ballenmechanismus (18, 20), wobei die mindestens eine Computereinrichtung (28, 54) konfiguriert ist, um
unter Verwendung des Ortes, der von der Komponente (30) zur Ermittlung des Ortes ermittelt worden ist, den Ort des Ballens (10, 12, 62) zu ermitteln,
unter Verwendung von zwei oder mehr Orten, die von der Komponente (30) zur Ermittlung des Ortes ermittelt worden sind, eine Ausrichtung, eine Führungsrichtung, eine Bewegungsrichtung oder einen Lenkwinkel des Ballenmechanismus (18, 20) zu ermitteln, und
unter Verwendung der Ausrichtung, der Führungsrichtung, der Bewegungsrichtung oder des Lenkwinkels die Orientierung des Ballens (10, 12, 62) zu ermitteln.

4. System nach Anspruch 1, wobei die mindestens eine Computereinrichtung (28, 54) konfiguriert ist, um zumindest eine Orientierungsachse des Ballens (10, 12, 62) relativ zu einer Hauptrichtung oder Himmelsrichtung (70) zu ermitteln.

5. System nach Anspruch 1, wobei die mindestens eine Computereinrichtung (28, 54) konfiguriert ist, um zumindest eine Orientierungsachse des Ballens (10, 12, 62) relativ zu einem Grenzstein oder einer Orientierungskennzeichen der Umgebung zu ermitteln.

6. System nach Anspruch 1, wobei die mindestens eine Computereinrichtung (28, 54) konfiguriert ist, um mindestens eine Orientierungsachse des Ballens (10, 12, 62) relativ zu einer Orientierung eines anderen Ballens (10, 12, 62) zu ermitteln.

7. System nach Anspruch 1, wobei die mindestens eine Computereinrichtung (28, 54) konfiguriert ist, um Positions- und Orientierungsinformationen mehrerer Ballen (10,12, 62), die von dem Ballenmechanismus (18, 20) erzeugt worden sind und auf der Bodenoberfläche angeordnet worden sind, zu zuordnen und die Positions- und Orientierungsinformationen für alle Ballen (10, 12, 62) als digitale Daten in einer Datenspeichereinrichtung (38, 56) zu speichern.

8. System nach Anspruch 7, wobei die mindestens eine Computereinrichtung (28, 54) konfiguriert ist, um eine Karte zu erzeugen, die den Ort und die Orientierung jedes Ballens (10, 12, 62) darstellt.

9. Verfahren zur Ermittlung eines Orts und einer Orientierung mindestens eines Ballens mit
einem Erzeugen eines Ballens (10 ,12 ,62) eines landwirtschaftlichen Produktes unter Verwendung eines mobilen Ballenmechanismus (18, 20) und einem Anordnen des Ballens auf einer Bodenoberfläche; und
einer Verwendung mindestens einer Computereinrichtung (28, 54) zur automatischen Ermittlung einer Orientierung des Ballens (10 ,12 ,62) auf der Bodenoberfläche;
**dadurch gekennzeichnet, dass** der Verfahrensschritt des automatischen Ermittelns einer Orientierung des Ballens (10, 12, 62) auf der Bodenoberfläche ein automatisches Ermitteln einer Position einer horizontalen Achse (64) des Ballens (10, 12, 62) um eine vertikale Achse (68) des Ballens, eines Nick-Neigungswinkels und eines Roll-Neigungswinkels des Ballens beinhaltet.

10. Verfahren nach Anspruch 9, des Weiteren mit einer Verwendung von Informationen von einem Kompass (44), um automatisch eine Orientierung des Ballenmechanismus (18, 20) zu ermitteln.

11. Verfahren nach Anspruch 9, des Weiteren mit
einer Verwendung von Informationen einer Ortsermittlungskomponente (30) zur automatischen Ermittlung eines Orts des Ballenmechanismus (18, 20),
einer Verwendung der mindestens einen Computereinrichtung zur automatischen Ermittlung einer Ausrichtung, einer Führungsrichtung, einer Bewegungsrichtung oder eines Lenkwinkels des Ballenmechanismus (18, 20) unter Verwendung von mindestens zwei von der Ortsermittlungskomponente (30) ermittelten Orten und
einer Verwendung der mindestens einen Computereinrichtung (28, 54) zur automatischen Ermittlung der Orientierung des Ballens (10, 12, 62) unter Verwendung der Ausrichtung, der Führungsrichtung, der Bewegungsrichtung oder des Lenkwinkels.

## Revendications

1. Dispositif de détermination de la position et de l'orientation d'une balle, comprenant :
un mécanisme de formation de balle mobile (18, 20) pouvant être utilisé afin de créer une balle (10, 12, 62) de produit agricole et de placer la balle sur une surface du sol ; et
un ou plusieurs dispositifs informatiques (28, 54) configurés de manière à déterminer automatiquement un emplacement et une orientation de la balle (10, 12, 62) sur la surface du sol ;
**caractérisé en ce que** les un ou plusieurs dispositifs informatiques (28, 54) sont configurés de manière à déterminer l'orientation de la balle (10, 12, 62) sous la forme d'une position d'un axe horizontal (64) de la balle (10, 12, 62) par rapport à un axe vertical (68) de la balle tel qu'une inclinaison longitudinale et une inclinaison transversale de la balle

2. Dispositif selon la revendication 1, comprenant, en outre, une boussole (44) afin de déterminer une orientation du mécanisme de formation de balle (18, 20), les un ou plusieurs dispositifs informatiques (28, 54) étant configurés de manière à déterminer automatiquement l'orientation de la balle (10, 12, 62) en utilisant les informations de la boussole (44).

3. Dispositif selon la revendication 1, comprenant, en outre, un composant de détermination de position (30) afin de déterminer une position du mécanisme de formation de balle (18, 20), les un ou plusieurs dispositifs informatiques (28, 54) étant configurés de manière à :
déterminer la position de la balle (10, 12, 62) en utilisant la position déterminée par le composant de détermination de position (30),
déterminer un cap du mécanisme de formation de balle (18, 20) en utilisant deux ou plusieurs positions telles que déterminées par le composant de détermination de position (30), et
déterminer l'orientation de la balle (10, 12, 62) en utilisant le cap.

4. Dispositif selon la revendication 1, les un ou plusieurs dispositifs informatiques (28, 54) étant configurés de manière à déterminer au moins un axe de l'orientation de la balle (10, 12, 62) par rapport à une direction cardinale (70).

5. Dispositif selon la revendication 1, les un ou plusieurs dispositifs informatiques (28, 54) étant configurés de manière à déterminer au moins un axe de l'orientation de la balle (10, 12, 62) par rapport à un repère environnemental.

6. Dispositif selon la revendication 1, les un ou plusieurs dispositifs informatiques (28, 54) étant configurés de manière à déterminer au moins un axe de l'orientation de la balle (10, 12, 62) par rapport à une orientation d'une autre balle (10, 12, 62).

7. Dispositif selon la revendication 1, les un ou plusieurs dispositifs informatiques (28, 54) étant configurés de manière à assigner des informations de position et d'orientation à une pluralité de balles (10, 12, 62) créées par le mécanisme de formation de balle (18, 20) et placées sur la surface du sol, et à mémoriser les informations de position et d'orientation de la totalité de la pluralité de balles (10, 12, 62) sous la forme de données numériques dans un dispositif de mémorisation de données (38, 56).

8. Dispositif selon la revendication 7, les un ou plusieurs dispositifs informatiques (28, 54) étant configurés de manière à produire une carte représentant la position et l'orientation de chacune des balles (10, 12, 62).

9. Procédé de détermination de position et d'orientation de balle, comprenant :
la création d'une balle (10, 12, 62) de produit agricole en utilisant un mécanisme de formation de balle mobile (18, 20) et en plaçant la balle sur une surface du sol ; et
l'utilisation d'un ou plusieurs dispositifs informatiques (28, 54) afin de déterminer automatiquement une orientation de la balle (10, 12, 62) sur la surface du sol ;
**caractérisé en ce que** l'étape de détermination automatique d'une orientation de la balle (10, 12, 62) sur la surface du sol comporte la détermination automatique d'une position d'un axe horizontal (64) de la balle (10, 12, 62) par rapport à un axe vertical (68) de la balle tel qu'une inclinaison longitudinale et une inclinaison transversale de la balle.

10. Procédé selon la revendication 9, comprenant, en outre, l'utilisation des informations d'une boussole (44) afin de déterminer automatiquement une orientation du mécanisme de formation de balle (18, 20).

11. Procédé selon la revendication 9, comprenant, en outre,
l'utilisation des informations d'un composant de détermination de position (30) afin de déterminer automatiquement une position du mécanisme de formation de balle (18, 20),
l'utilisation des un ou plusieurs dispositifs informatiques (28, 54) afin de déterminer automatiquement un cap du mécanisme de formation de balle (18, 20) en utilisant deux ou plusieurs positions telles que déterminées par le composant de détermination de position (30), et
l'utilisation des un ou plusieurs dispositifs informatiques (28, 54) afin de déterminer automatiquement l'orientation de la balle (10, 12, 62) en utilisant le cap.
